# EUROPÄISCHE PATENTANMELDUNG

(11) **EP 3 967 145 A1**
(43) Veröffentlichungstag der Anmeldung: **16.03.2022**
(21) Anmeldenummer: 20195589.5
(22) Anmeldetag: 10.09.2020
(51) Int. Cl.: A21C 9/02, B65G 17/12, F26B 15/12

(54) **SYSTEM ZUR BEFÖRDERUNG VON TEIGWAREN**

(71) Anmelder: Bühler AG, 9240 Uzwil (CH)
(72) Erfinder: Rohrer, Patrick, 8444 Henggart (CH); Hugentobler, Mirjam, 9492 Oberuywil (CH); Kast, Simon, 9240 Uzwil (CH)
(74) Vertreter: Hepp Wenger Ryffel AG

(57) **Zusammenfassung**

Die vorliegende Erfindung betrifft ein Fördersystem (1) für eine Anlage zur Herstellung von länglichen Teigwaren, beispielsweise Spaghetti, mit einer Übergabeeinheit (3) zur Übergabe von Förderelementen (4) von einer ersten Fördereinheit (2a) zu einer zweiten Fördereinheit (2b), wobei die Übergabeeinheit (3) ein rotierbar gelagertes Kurvenscheibenelement (3a) mit einer Greifeinrichtung (3b) und ein fest angeordnetes Führungselement (3c) mit einem in etwa kreissegmentförmigen Oberflächenabschnitt (3d) umfasst, welche derart zueinander angeordnet sind, dass ein von der Greifeinrichtung (3b) des Kurvenscheibenelements (3a) von der ersten Fördereinheit (2a) übernommenes Förderelement (4) durch Rotation des Kurvenscheibenelements (3a) entlang des in etwa kreissegmentförmigen Oberflächenabschnitts (3d) des Führungselements (3c) bis zu einer Position bewegt werden kann, wo das Förderelement (4) von der zweiten Fördereinheit (2b) übernommen werden kann. Die vorliegende Erfindung betrifft weiterhin eine Anlage (A) zur Herstellung von länglichen Teigwaren sowie ein Verfahren zur Förderung von länglichen Teigwaren.

## Beschreibung

Die vorliegende Erfindung betrifft ein System zur Beförderung von Teigwaren, welches eine kontinuierliche und sanfte Beförderung ermöglicht.

Teigwaren werden üblicherweise nach dem Pressen von Fördereinheiten aufgenommen, mit denen sie durch einen Teigwarentrockner gefördert werden. Beispielsweise werden lange Teigwaren, wie etwa Spaghetti, auf Stäbe gehängt, deren Enden von Kettengliedern eines Kettenförderers lose aufgenommen werden.

In Anlagen zur Herstellung von länglichen Teigwaren, beispielsweise Spaghetti, ist es erforderlich, die Teigwaren von einer Fördereinheit auf eine andere Fördereinheit zu überführen. Beispielsweise sind Trocknungseinheiten derartiger Anlagen aus Platzgründen so ausgebildet, dass die Teigwaren den Raum innerhalb der Trocknungseinheit mehrfach mit Hilfe verschiedener Fördereinheiten durchlaufen. Weiterhin müssen die beispielsweise durch Extrusion hergestellten Teigwaren zu einer Schneideeinheit befördert und an diese übergeben werden.

Insbesondere im feuchten Zustand sind Teigwaren ausserordentlich empfindlich gegenüber Schlägen, Vibrationen oder anderen ruckartigen Bewegungen. Die Überführung von Teigwaren von einer Fördereinheit zu einer anderen Fördereinheit muss daher mit grosser Sorgfalt erfolgen, um eine Beschädigung der Teigwaren zu vermeiden.

Dieses Problem ist im Stand der Technik noch nicht zufriedenstellend gelöst.

Die Übergabe der Teigwaren (beziehungsweise der Stäbe, an denen die Teigwaren aufgehängt sind) von einer Fördereinheit auf die nächste Fördereinheit erfordert eine genaue Abstimmung der Bewegung der einzelnen Fördereinheiten. Üblicherweise bedingt diese Abstimmung, dass eine Fördereinheit intermittierend bewegt wird: Erst wenn die vorgängig angeordnete Fördereinheit das zu fördernde Element (beispielweise ein Stab mit daran aufgehängten Teigwaren) bis zu einer bestimmten Position befördert hat, setzt sich die nachfolgende Fördereinheit in Bewegung. Dies ist beispielsweise in der GB-1,048,163 beschrieben.

Eine derartige Förderung ist aus verschiedenen Gründen nachteilig. Wenn das zu fördernde Element (beispielweise ein Stab mit daran aufgehängten Teigwaren) von der ersten Fördereinheit (beispielsweise eine Pendelkette oder ein Kettenförderer) auf die nachfolgende, ruhende Fördereinheit (beispielsweise ein Kettenförderer) übergeben wird, erfährt das zu fördernde Element einen ersten Schlag. Die nachfolgende Fördereinheit setzt sich nun in Bewegung und befördert das Element zu einer nächsten Übergabestelle (beispielsweise eine nachfolgende Fördereinheit wie eine Abstreifkette einer Schneidmaschine), wobei das Element bei der Übergabe einen weiteren Schlag erfährt. Die Fördereinheiten (Kettenförderer, Abstreifkette) werden hierbei intermittierend (d.h. im Stop-and-go-Betrieb) bewegt. Das ruckartige Anfahren der Fördereinheiten verursacht Schläge auf das zu fördernde Element, ist gegenüber einem kontinuierlichen Betrieb zeitaufwendig und belastet die elektrischen Komponenten. Im technischen Einsatz erlaubt eine derartige Anlage eine Förderung von etwa 11-12 Stäben (mit daran aufgehängten Teigwaren) pro Minute und pro Maschine.

In der US-2,965,214 A ist ein kontinuierliches Fördersystem beschrieben, bei welchem zu fördernde Elemente von einer Förderkette auf eine nachfolgende Förderkette mit Hilfe einer rotierenden Scheibe mit Greifelementen übergeben werden. Die rotierende Scheibe ist symmetrisch zwischen den Förderketten positioniert und wird mittels eines Planetengetriebes betrieben, um abrupte Richtungswechsel der auf der rotierenden Scheibe angeordneten Greifelemente zu verhindern. Dieses Fördersystem benötigt aber viel Raum, was seinen Aufbau in eine Anlage zur Herstellung von länglichen Teigwaren herausfordernd gestaltet. Zudem ist die geometrische Anordnung der Übergabeeinheit herausfordernd und erfordert äusserte Präzision, was seine Installation zeitaufwendig macht.

In der US-3,472,354 wird ein Fördersystem beschrieben, bei welchem die Übergabe der Förderelemente von einer Förderkette auf eine nachfolgende Förderkette mit Hilfe einer Transferarmeinheit durchgeführt wird. Auch dieses Fördersystem beinhaltet ein Planetengetriebe mit den vorstehend beschriebenen Nachteilen.

Es war die Aufgabe der vorliegenden Erfindung, ein Fördersystem für eine Anlage zur Herstellung von länglichen Teigwaren wie Spaghetti bereitzustellen, welches die Nachteile aus dem Stand der Technik überwindet und insbesondere eine sanfte, effiziente und kontinuierliche Übergabe von Förderelementen von einer Fördereinheit zu einer anderen Fördereinheit ohne abrupte Richtungswechsel ermöglicht.

Diese Aufgabe wird durch das erfindungsgemässe Fördersystem gelöst.

Die vorliegende Erfindung betrifft ein Fördersystem für eine Anlage zur Herstellung von länglichen Teigwaren, beispielsweise Spaghetti, umfassend eine erste Fördereinheit und eine zweite Fördereinheit sowie eine Übergabeeinheit zur Übergabe von Förderelementen von der ersten Fördereinheit zur zweiten Fördereinheit, dadurch gekennzeichnet, dass die Übergabeeinheit ein rotierbar gelagertes Kurvenscheibenelement mit einer Greifeinrichtung und ein fest angeordnetes Führungselement mit einem in etwa kreissegmentförmigen Oberflächenabschnitt umfasst, wobei das Kurvenscheibenelement und das Führungselement derart zueinander angeordnet sind, dass ein von der Greifeinrichtung des Kurvenscheibenelements von der ersten Fördereinheit übernommenes Förderelement durch Rotation des Kurvenscheibenelements entlang der in etwa kreissegmentförmigen Oberflächenabschnitts des Führungselements bis zu einer Position bewegt werden kann, wo das Förderelement von der zweiten Fördereinheit übernommen werden kann.

Mit dem erfindungsgemässen Fördersystem wird eine Förderung erreicht, bei welcher keine Schläge oder Vibrationen auf das zu fördernde Gut (beispielsweise Teigwaren) ausgeübt werden. Das zu fördernde Gut unterliegt somit deutlich geringerer Belastung, sodass ein während der Förderung entstehender Produktverlust verringert beziehungsweise vollständig vermieden werden kann.

Die Förderung erfolgt ohne abrupte Richtungswechsel und kann besonders vorteilhaft kontinuierlich durchgeführt werden. Dadurch können die mit einem intermittierenden Förderprozess verbundenen Zeitverluste vermieden und die Leistung des Fördersystems erhöht werden.

Beispielsweise kann für den Fall der Förderung von Stäben, welche mit Teigwaren beladen sind, zu einer Schneidmaschine die Förderleistung von etwa 11-12 Stäben pro Minute bei herkömmlichen Anlagen auf 15 Stäbe pro Minute bei der erfindungsgemässen Anlage erhöht werden. Für den Fall einer erfindungsgemäss bevorzugten Doppelschneidmaschine bedeutet dies eine Leistungserhöhung von 22-24 Stäben pro Minute auf 30 Stäbe pro Minute.

Das erfindungsgemässe Fördersystem kann für jegliche Transportschritte von länglichen Teigwaren wie Spaghetti eingesetzt werden. Beispielsweise seien der Transport von länglichen Teigwaren in einem Trockner, zu einer Schneidmaschine, zu einem Ablegetisch oder zu einem Verteiler genannt. Erfindungsgemäss bevorzugt wird das erfindungsgemässe Fördersystem zum Transport von länglichen Teigwaren zu einer Schneidmaschine eingesetzt, besonders bevorzugt zur Verteilung Transport von länglichen Teigwaren auf zwei Einheiten einer Doppelschneidmaschine.

Das wesentliche Element des erfindungsgemässen Fördersystems ist eine Übergabeeinheit. Mit der Übergabeeinheit wird die Übergabe von Förderelementen von einer ersten Fördereinheit zu einer zweiten Fördereinheit erreicht.

Bei den Förderelementen handelt es sich vorzugsweise um Stäbe zur Beförderung von länglichen Teigwaren. Vorzugsweise sind die länglichen Teigwaren an den Stäben aufgehängt.

Fördereinheiten zur Beförderung von Förderelementen wie den vorstehend genannten Stäben sind bekannt. Vorzugsweise handelt es sich um Transportketten mit gleichförmig auf den Ketten angeordneten Mitnehmern. Derartige Transportketten sind bekannt und müssen hier nicht näher erläutert werden. Beispielsweise kann es sich bei den erfindungsgemäss verwendeten Transportketten zumindest teilweise um Pendelketten handeln. Die Förderelemente werden auf bekannte Weise mittels eines Motors angetrieben, vorzugsweise mittels eines Servomotors. Der Motor kann beispielsweise ein Rad antreiben, um welches das Förderelement wie beispielsweise eine Transportkette geführt wird.

Bei den Mitnehmern handelt es sich um bekannte Elemente, welche jeweils einen Stab aufnehmen und in horizontaler Lage halten können, während der Stab durch das Förderelement bewegt wird.

Die erfindungsgemässe Übergabeeinheit umfasst ein Kurvenscheibenelement und ein Führungselement. Erfindungsgemäss wird unter einem Kurvenscheibenelement ein scheibenförmiges Bauteil mit einer kurvenförmigen Umfangsfläche verstanden. Die Dimensionen des Kurvenscheibenelements sind von den Dimensionen des Fördersystems abhängig und so zu wählen, dass es die nachstehend beschriebene Funktion erfüllen kann.

Das Kurvenscheibenelement kann vorzugsweise die Form eines Kreissegments haben, beispielsweise eines Achtelsegments eines Kreises.

Das Kurvenscheibenelement ist rotierbar angeordnet und weist eine Greifeinrichtung auf. Die rotierbare Anordnung kann auf bekannte Weise realisiert werden, beispielsweise durch Anordnung des Kurvenscheibenelements auf einer Welle. Die Welle ist vorzugsweise mittels eines Motors angetrieben, vorzugsweise mittels eines Servomotors.

Die Greifeinrichtung ist vorzugsweise eine zur Umfangsfläche des Kurvenscheibenelements hin teilweise geöffnete Aussparung im Kurvenscheibenelement, welche eine derartige Form aufweist, dass sie das vorstehend beschriebene Förderelement, vorzugsweise einen längliche Teigwaren tragenden Stab, derart aufnehmen kann, dass das Förderelement während des Transports durch die Übergabeeinheit keine Schläge oder Vibrationen erfährt. Dies wird vorzugsweise dadurch erreicht, dass die Form zumindest eines Abschnitts der Greifeinrichtung der Form des Förderelements entspricht, d.h. das Förderelement kann durch die Öffnung der Greifeinrichtung in diese in den Abschnitt gelangen, welcher der Form des Förderelements entspricht. Beispielsweise kann die Greifeinrichtung einen ersten Abschnitt mit im Wesentlichen quaderförmigen Querschnitt aufweisen, welcher zumindest abschnittsweise zur Umfangsfläche des Kurvenscheibenelements hin geöffnet ist. An diesen ersten Abschnitt mit im Wesentlichen quaderförmigen Querschnitt schliesst sich bei dieser beispielhaften Ausführungsform ein direkt mit dem ersten Abschnitt verbundener zweiter Abschnitt mit im Wesentlichen halbkreisförmigem Abschnitt an, welcher der Form des Förderelements entspricht und das Förderelement wie vorstehend beschrieben aufnehmen kann.

Vorzugsweise sind die Greifeinrichtung und die rotierbare Lagerung (beispielsweise auf einer Welle) an entgegengesetzten Enden des Kurvenscheibenelements angeordnet.

Die erfindungsgemässe Übergabeeinheit umfasst weiterhin ein Führungselement. Das Führungselement dient dazu, dass das von dem Kurvenscheibensegment aufgenommene Förderelement auf einer festgelegten Bahn zu führen und ein Herausgleiten des Förderelements aus der Greifeinrichtung des Kurvenscheibenelements zu verhindern, wenn das Kurvenscheibenelement rotiert. Da das Kurvenscheibenelement während seiner Rotation eine Kreisbahn durchläuft, weist das Führungselement in einem dem Kurvenscheibenelement zugewandten Abschnitt eine entsprechende in etwa kreissegmentförmige Oberfläche auf, welche als Führung für das Förderelement dient. Beispielsweise kann das Förderelement quaderförmig mit einer kreissegmentförmigen Aussparung in dem Oberflächenabschnitt sein, welcher dem Kurvenscheibenelement zugeordnet ist. Das Führungselement ist fest in dem Fördersystem angeordnet, d.h. es bewegt sich während des Fördervorgangs nicht.

Das Kurvenscheibenelement und das Führungselement sind derart zueinander angeordnet, dass ein in der Greifeinrichtung des Kurvenscheibenelements befindliches Förderelement während der kreisförmigen Bewegung des Kurvenscheibenelements in Kontakt mit dem in etwa kreissegmentförmigen Oberflächenabschnitt des Führungselements kommt. Das Förderelement wird mit Hilfe der Greifeinrichtung auf dem in etwa kreissegmentförmigen Oberflächenabschnitt des Führungselements bewegt, beispielsweise im Fall einer Aussparung als Greifeinrichtung durch das der Bewegungsrichtung des Kurvenscheibenelements abgewandte Ende der Aussparung, welches während der Bewegung gegen das Förderelement stösst und dieses in die Rotationsrichtung des Kurvenscheibenelements drückt.

Das Kurvenscheibenelement und das Führungselement können versetzt zueinander angeordnet sein, so dass das Kurvenscheibenelement während seiner Rotationsbewegung vor oder hinter dem Führungselement bewegt wird.

Damit die vorstehende Funktion gewährleistet ist, sind die Positionen und Dimensionen des Kurvenscheibenelements und des ihm zugeordneten Führungselements derart zu wählen, dass ein in der Greifeinrichtung des Kurvenscheibenelements befindliches Förderelement während der Rotationsbewegung des Kurvenscheibenelements genau entlang des in etwa kreissegmentförmigen Oberflächenabschnitts des Führungselements bewegt werden kann.

Vorzugsweise ist der in etwa kreissegmentförmige Oberflächenabschnitt des Führungselements ein Kreissegment unter einem Winkel von 45-75° eines Kreises mit der Rotationsachse des Kurvenscheibenelements als Mittelpunkt.

Eine zweite Fördereinheit, vorzugsweise einer Transportkette, übernimmt am Ende oder in der Nähe eines Endes des in etwa kreissegmentförmige Oberflächenabschnitts des Führungselements das Förderelement und bewegt das Förderelement anschliessend von der Übergabeeinheit fort. Die zweite Fördereinheit weist vorzugsweise ebenfalls Mitnehmer wie vorstehend beschrieben auf.

Um einen kontinuierlichen Betrieb zu gewährleisten, sind die Bewegungen der ersten Fördereinheit und der Übergabeeinheit derart aufeinander abzustimmen, dass ein Mitnehmer der ersten Fördereinheit und die Greifeinrichtung der Übergabeeinheit gleichzeitig an einem Übergabepunkt eintreffen. Dieser Übergabepunkt wird erfindungsgemäss als erster Übergabepunkt P1 bezeichnet. Befördert dieser Mitnehmer der ersten Fördereinheit ein Förderelement, kann dieses Förderelement am ersten Übergabepunkt P1 von der Greifeinrichtung der Übergabeeinheit in einer kontinuierlichen Bewegung übernommen werden, ohne dass hierbei Schläge oder Vibrationen auf das Förderelement ausgeübt werden.

Weiterhin sind die Bewegungen der zweiten Fördereinheit und der Übergabeeinheit derart aufeinander abzustimmen, dass ein Mitnehmer der zweiten Fördereinheit und die Greifeinrichtung der Übergabeeinheit gleichzeitig an einem Übergabepunkt eintreffen. Dieser Übergabepunkt wird erfindungsgemäss als zweiter Übergabepunkt P2 bezeichnet. Befördert die Greifeinrichtung der Übergabeeinheit ein Förderelement, kann dieses Förderelement am zweiten Übergabepunkt P2 von einem Mitnehmer der zweiten Fördereinheit einer kontinuierlichen Bewegung übernommen werden, ohne dass hierbei Schläge oder Vibrationen auf das Förderelement ausgeübt werden.

Dies wird erfindungsgemäss bevorzugt erreicht, indem die erste und zweite Fördereinheit mit einer jeweils konstanten Geschwindigkeit bewegt werden, während das Kurvenscheibenelement eine bestimmte Bewegungskurve durchfährt. Diese Bewegungskurve zeichnet sich dadurch aus, dass das Kurvenscheibenelement mit der Greifeinrichtung an den Übergabepunkten P1 und P2 eine Rotationsgeschwindigkeit aufweist, welche im Wesentlichen, vorzugsweise genau, der Geschwindigkeit der entsprechenden Fördereinheit an diesem Übergabepunkt entspricht. Zwischen den Übergabepunkten wird das Kurvenscheibenelement beschleunigt, um rechtzeitig mit der Greifeinrichtung zur Übernahme oder Übergabe eines Förderelements am entsprechenden Übergabepunkt zu sein. Das Beschleunigungsprofil ist dabei den Geschwindigkeiten der Fördereinheiten anzupassen. Beispielsweise kann das Kurvenscheibenelement direkt nach einem Übergabepunkt einen Bereich mit geringerer Beschleunigung durchlaufen, um dann in einem anschliessenden Bereich mit einer grösseren Beschleunigung bewegt zu werden.

Die Fördereinheiten können derart angeordnet sein, dass sie ein Förderelement vertikal oder horizontal von der Übergabeeinheit weg befördern. Bevorzugt ist, dass das Förderelement vertikal von der Übergabeeinheit weg befördert wird.

Erfindungsgemäss bevorzugt dient das erfindungsgemässe Fördersystem zur Förderung von länglichen Teigwaren, beispielsweise Spaghetti, zu einer Schneidmaschine. Gemäss dieser Ausführungsform handelt es sich bei der ersten Fördereinheit um eine Pendelkette, welche die länglichen Teigwaren (vorzugsweise an einem Stab aufgehängt) von einer Staplereinheit vertikal nach unten zur vorstehend beschrieben Übergabeeinheit des erfindungsgemässen Fördersystems fördert. Mit Hilfe der Übergabeeinheit werden die länglichen Teigwaren (vorzugsweise an einem Stab aufgehängt) zu einer zweiten Fördereinheit transportiert, bei welcher es sich um eine Abstreifkette handelt und von welcher die länglichen Teigwaren (vorzugsweise an einem Stab aufgehängt) vertikal nach oben zu einem Ablagetisch einer Schneidmaschine transportiert werden.

Erfindungsgemäss besonders bevorzugt wird das Fördersystem in einer Doppelschneidmaschine eingesetzt.

Eine Doppelschneidmaschine (beziehungsweise eine Anlage zur Herstellung von länglichen Teigwaren, beispielsweise Spaghetti, mit zwei Schneidmodulen) ist bekannt.

Bei dieser besonders bevorzugten Ausführungsform weist die Übergabeeinheit des erfindungsgemässen Fördersystems ein erstes und ein zweites Kurvenscheibenelement sowie ein erstes und ein zweites Führungselement mit jeweils einem in etwa kreissegmentförmigen Oberflächenabschnitt auf. Jedem Kurvenscheibenelement ist eine zweite Fördereinheit zugeordnet, wobei das erste Kurvenscheibenelement und das erste Führungselement sowie das zweite Kurvenscheibenelement und das zweite Führungselement derart zueinander angeordnet sind, dass ein von der Greifeinrichtung des jeweiligen Kurvenscheibenelements von der ersten Fördereinheit übernommenes Förderelement durch Rotation des jeweiligen Kurvenscheibenelements entlang des in etwa kreissegmentförmigen Oberflächenabschnitts des jeweils zugeordneten Führungselements bis zu einer Position bewegt werden kann, wo das Förderelement von der zweiten Fördereinheit übernommen werden kann.

Mit anderen Worten werden die Förderelemente, beispielsweise Stäbe mit daran aufgehängten länglichen Teigwaren, von der Übergabeeinheit auf die beiden Schneidmaschinen verteilt, indem die Förderelemente von der ersten Fördereinheit abwechselnd von dem ersten Kurvenscheibenelement und dem zweiten Kurvenscheibenelement übernommen und zur entsprechenden zweiten Fördereinheit transportiert werden.

Vorzugsweise sind bei dieser Ausführungsform das erste und zweite Kurvenscheibenelement sowie das erste und ein zweite Führungselement achsensymmetrisch um die erste Fördereinheit angeordnet, d.h. mit Hilfe einer durch die erste Fördereinheit gedanklich gelegte Spiegelebene lassen sich das erste Kurvenscheibenelement und das erste und ein zweite Führungselement durch Spiegelung auf die Positionen des zweiten Kurvenscheibenelements und des zweiten Führungselements abbilden.

Bei dieser bevorzugten Ausführungsform sind die erste und zweite Fördereinheit, die Übergabeeinheit und die Förderelemente vorzugsweise wie vorstehend beschrieben.

Bei dieser bevorzugten Ausführungsform werden die beiden Kurvenscheibenelemente gegensinnig zueinander bewegt. Beispielsweise kann das erste Kurvenscheibenelement im Uhrzeigersinn und das zweite Kurvenscheibenelement entgegen dem Uhrzeigersinn rotiert werden. Die Rotationsbewegungen der beiden Kurvenscheibenelemente sind vorzugsweise so aufeinander abgestimmt, dass wenn sich die Greifeinrichtung des ersten Kurvenscheibenelements am ersten Übergabepunkt P1 befindet, die Greifeinrichtung des zweiten Kurvenscheibenelements am zweiten Übergabepunkt P2 befindet, und umgekehrt. Es ist wesentlich, dass die Bewegung des ersten Kurvenscheibenelements und des zweiten Kurvenscheibenelements derart aufeinander abgestimmt sind, dass das erste Kurvenscheibenelement nicht mit dem zweiten Kurvenscheibenelement kollidiert, und zudem keines der Kurvenscheibenelemente mit der ersten oder zweiten Fördereinheit kollidiert.

De Kurvenscheibenelemente durchlaufen vorzugsweise die gleichen bewegungskurven wie vorstehend beschrieben, d.h. dass das jeweilige Kurvenscheibenelement mit der Greifeinrichtung an den Übergabepunkten P1 und P2 eine Rotationsgeschwindigkeit aufweist, welche im Wesentlichen, vorzugsweise genau, der Geschwindigkeit der entsprechenden Fördereinheit an diesem Übergabepunkt entspricht. Zwischen den Übergabepunkten wird das jeweilige Kurvenscheibenelement beschleunigt, um rechtzeitig mit der Greifeinrichtung zur Übernahme oder Übergabe eines Förderelements am entsprechenden Übergabepunkt zu sein. Das Beschleunigungsprofil ist dabei den Geschwindigkeiten der Fördereinheiten anzupassen. Beispielsweise kann das jeweilige Kurvenscheibenelement direkt nach einem Übergabepunkt einen Bereich mit geringerer Beschleunigung durchlaufen, um dann in einem anschliessenden Bereich mit einer grösseren Beschleunigung bewegt zu werden.

Die vorliegende Erfindung betrifft auch eine Anlage zur Herstellung von länglichen Teigwaren, beispielsweise Spaghetti, umfassend ein erfindungsgemässes Fördersystem wie hier beschrieben.

Derartige Anlagen sind bekannt. Erfindungsgemäss bevorzugt ist die Anlage eine Doppelschneidmaschine, beziehungsweise eine Anlage zur Herstellung von länglichen Teigwaren, beispielsweise Spaghetti, mit zwei Schneidmodulen. Das erfindungsgemässe Fördersystem ist dann wie vorstehend bevorzugt beschrieben derart ausgestaltet, dass es die länglichen Teigwaren gleichmässig auf die beiden Schneidmodule verteilt.

Die vorliegende Erfindung betrifft weiterhin ein Verfahren zur Förderung von länglichen Teigwaren, beispielsweise Spaghetti, mit einem erfindungsgemässen Fördersystem, umfassend die Schritte:
a) Förderung eines Förderelements, welches die länglichen Teigwaren trägt, mittels einer ersten Fördereinheit bis zu einem ersten Übergabepunkt,
b) Übernahme des Förderelements von der ersten Fördereinheit durch eine Übergabeeinheit und Förderung des Förderelements bis zu einem zweiten Übergabepunkt,
c) Übernahme des Förderelements am zweiten Übergabepunkt von der Übergabeeinheit durch eine zweite Fördereinheit, dadurch gekennzeichnet, dass in Schritt b) die Übernahme des Förderelements am ersten Übergabepunkt durch die Greifeinrichtung des Kurvenscheibenelements der Übergabeeinheit erfolgt, und die Förderung des Förderelements bis zu einem zweiten Übergabepunkt entlang des in etwa kreissegmentförmigen Oberflächenabschnitts des Führungselements der Übergabeeinheit erfolgt.

Die Details dieses Verfahrens wurden bereits vorstehend beschrieben.

Wie vorstehend beschrieben sind die Rotationsgeschwindigkeit des Kurvenscheibenelements und die Fördergeschwindigkeiten der ersten Fördereinheit und der zweiten Fördereinheit vorzugsweise derart aufeinander abgestimmt, dass am ersten Übergabepunkt und am zweiten Übergabepunkt die Greifeinrichtung das Förderelement in einem kontinuierlichen Prozess von der ersten Fördereinheit aufnehmen beziehungsweise an die zweite Fördereinheit (2a) abgeben kann. Auf diese Weise werden Schläge oder Vibrationen auf das Förderelement verringert beziehungsweise vollständig vermieden.

Vorzugsweise wird das Förderelement von der zweiten Fördereinheit zu einer Schneidmaschine transportiert, d.h. die Erfindung wird in einer vorstehend beschriebenen Anlage eingesetzt.

Wie vorstehend beschrieben sind die Bewegung des ersten Kurvenscheibenelements und des zweiten Kurvenscheibenelements derart aufeinander abgestimmt, dass das erste Kurvenscheibenelement nicht mit dem zweiten Kurvenscheibenelement kollidiert.

Gemäss einer bevorzugten Ausführungsform beträgt am ersten die Fördergeschwindigkeit der ersten Fördereinheit 50% der Rotationsgeschwindigkeiten der Kurvenscheibenelemente, wobei sich die Kurvenscheibenelemente gegensinnig mit gleicher Geschwindigkeit drehen. Die Rotationsgeschwindigkeiten der Kurvenscheibenelemente sind hierbei durchschnittliche Geschwindigkeiten, wenn die Kurvenscheibenelemente wie vorstehend beschrieben mit der bevorzugten Bewegungskurve betrieben werden.

Die vorliegende Erfindung hat den Vorteil, dass im Fall der bevorzugten Ausführungsform des Einsatzes in einer Doppelschneidmaschine im Fall einer Störung die Rotation desjenigen Kurvenscheibenelements angehalten wird, welches in der mit der Störung behafteten Förderbahn angeordnet ist. Mit anderen Worten kann im Fall einer Störung nach wie vor das nicht von der Störung betroffene Schneidmodul mit Teigwaren beliefert werden, und die Ausfallzeiten der Anlage werden verringert.

Im Fall einer Störung wird vorzugsweise die Fördergeschwindigkeit der ersten Fördereinheit um 50% verringert, da nun die Förderelemente nicht mehr abwechselnd auf die beiden Schneidmodule verteilt werden sollen, sondern nur noch ein Schneidmodul mit allen Förderelement beliefert werden soll. Damit das noch im Betrieb befindliche Kurvenscheibenelement sämtliche Förderelemente übernehmen kann, muss entsprechend die Geschwindigkeit der ersten Fördereinheit angepasst werden.

Die vorliegende Erfindung wird nachstehend anhand von nicht einschränkenden Beispielen und Zeichnungen näher erläutert. Es zeigen:
- Fig. 1: eine schematische Ansicht einer Ausführungsform des er-findungsgemässen Fördersystems
- Fig. 2a: eine schematische Ansicht einer Ausführungsform des er-findungsgemässen Fördersystems in einer Anfangsposition der Förderung
- Fig. 2b: eine schematische Ansicht einer Ausführungsform des erfindungsgemässen Fördersystems in einer ersten Zwischenposition der Förderung
- Fig. 2c: eine schematische Ansicht einer Ausführungsform des erfindungsgemässen Fördersystems in einer zweiten Zwischenposition der Förderung
- Fig. 2d: eine schematische Ansicht einer Ausführungsform des erfindungsgemässen Fördersystems in einer dritten Zwischenposition der Förderung
- Fig. 3: eine Bewegungskurve eines Kurvenscheibenelements einer Ausführungsform des erfindungsgemässen Fördersystems
- Fig. 4: eine schematische Ansicht einer Ausführungsform einer erfindungsgemässen Anlage zur Herstellung von länglichen Teigwaren.

Gleiche Bezugszeichen bezeichnen in unterschiedlichen Figuren die gleichen Komponenten.

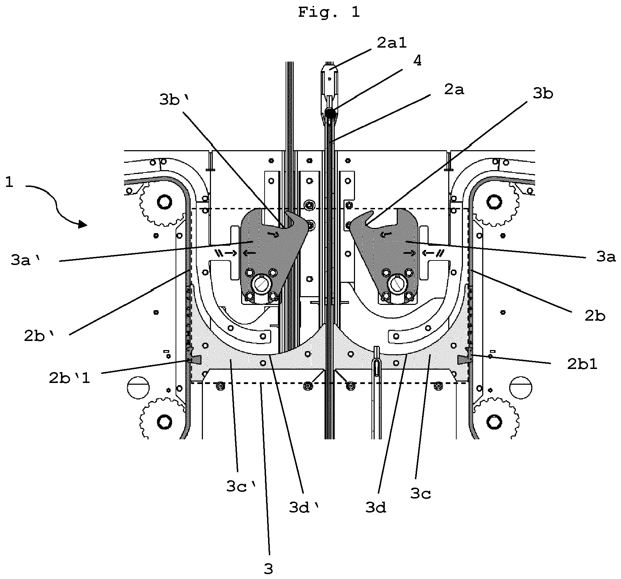

In Fig. 1 ist eine schematische Ansicht einer Ausführungsform des erfindungsgemässen Fördersystems (1) gezeigt. Es handelt sich um ein Fördersystem zum Transport von Förderelementen (4) zu zwei (nicht gezeigten) Schneidmodulen.

Das Fördersystem 1 umfasst eine erste Fördereinheit 2a, beispielsweise eine Pendelkette, und eine zweite Fördereinheit 2b, beispielsweise eine Abstreifkette, sowie eine Übergabeeinheit 3 zur Übergabe von Förderelementen 4, beispielsweise Stäbe mit daran aufgehängten länglichen Teigwaren, von der ersten Fördereinheit 2a zur zweiten Fördereinheit 2b.

Die Übergabeeinheit 3 weist ein erstes und ein zweites Kurvenscheibenelement 3a, 3a' sowie ein erstes und ein zweites Führungselement 3c, 3c' mit jeweils einem in etwa kreissegmentförmigen Oberflächenabschnitt 3d, 3d' auf, wobei die in etwa kreissegmentförmigen Oberflächenabschnitte 3d, 3d' dem jeweiligen Kurvenscheibenelement 3a, 3a' zugewandt sind. Jedem Kurvenscheibenelement 3a, 3a' ist eine zweite Fördereinheit 2b, 2b' zugeordnet, wobei das erste Kurvenscheibenelement 3a und das erste Führungselement 3c sowie das zweite Kurvenscheibenelement 3a' und das zweite Führungselement 3c' derart zueinander angeordnet sind, dass ein von der Greifeinrichtung 3b, 3b' des jeweiligen Kurvenscheibenelements 3a, 3a' von der ersten Fördereinheit 2a übernommenes Förderelement 4 durch Rotation des jeweiligen Kurvenscheibenelements 3a, 3a' entlang des in etwa kreissegmentförmigen Oberflächenabschnitts 3d, 3d' des jeweils zugeordneten Führungselements 3c, 3c' bis zu einer Position bewegt werden kann, wo das Förderelement 4 von der zweiten Fördereinheit 2b, 2b' übernommen werden kann.

Das erste Förderelement 2a weist gleichmässig beabstandete Mitnehmer 2a1 auf, welche jeweils ein Förderelement (4) aufnehmen und transportieren können.

Das zweite Förderelement 2b, 2b' weist gleichmässig beabstandete Mitnehmer 2b1, 2b'1 auf, welche jeweils ein Förderelement 4 aufnehmen und transportieren können.

Das erste und zweite Kurvenscheibenelement 3a, 3a' sowie das erste und ein zweite Führungselement 3c, 3c' sind in der Ausführungsform gemäss Fig. 1 achsensymmetrisch um die erste Fördereinheit 2a angeordnet.

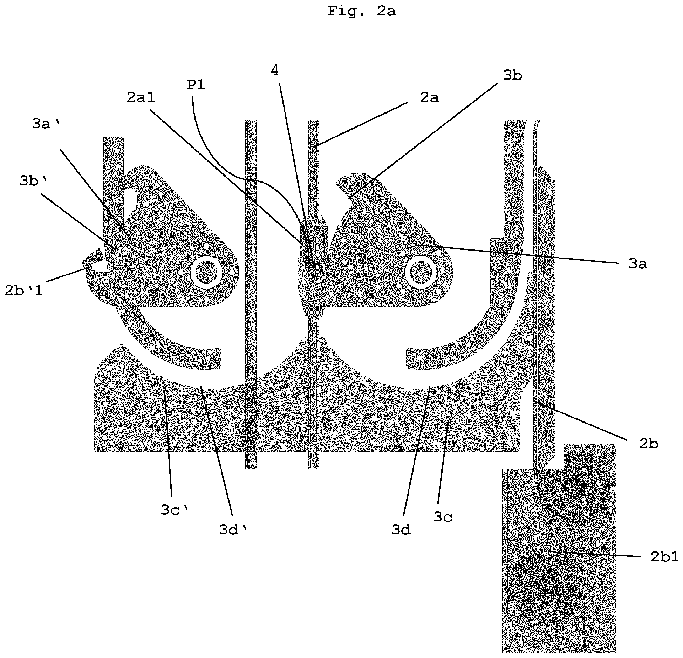

In den Figuren 2a bis 2d ist eine Ausführungsform des erfindungsgemässen Verfahrens anhand des in Fig. 1 gezeigten Fördersystems 1 schematisch veranschaulicht.

In einer in Fig. 2a gezeigten Anfangsposition befindet sich die Greifeinrichtung 3b des ersten Kurvenscheibenelements 3a am ersten Übergabepunkt P1. Gleichzeitig befindet sich ein Mitnehmer 2a1 der ersten Fördereinheit 2a am ersten Übergabepunkt P1. Der Mitnehmer 2a1 trägt ein Förderelement 4, welches am ersten Übergabepunkt P1 von der Greifeinrichtung 3b des Kurvenscheibenelements 3a in einer vorzugsweise kontinuierlichen Bewegung übernommen wird.

Die Greifeinrichtung 3b' des zweiten Kurvenscheibenelements 3a' befindet sich zu diesem Zeitpunkt am zweiten Übergabepunkt P2. Gleichzeitig befindet sich ein Mitnehmer 2b1' der zweiten Fördereinheit 2b' (hier nicht gezeigt) am zweiten Übergabepunkt P2, trägt aber kein Förderelement 4.

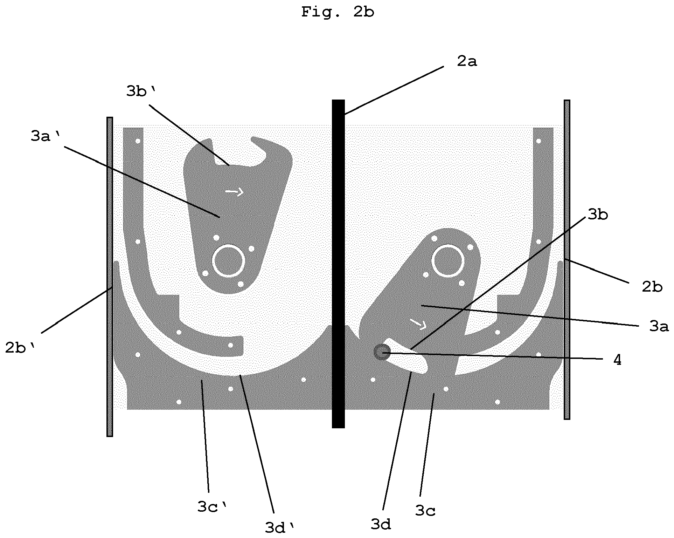

In der in Fig. 2b gezeigten Position wurden beide Kurvenscheibenelemente 3a, 3a' um etwa 70° rotiert, wobei das erste Kurvenscheibenelement 3a entgegen dem Uhrzeigersinn und das zweite Kurvenscheibenelement 3a' im Uhrzeigersinn gedreht wurde. Die Greifeinrichtung 3b des ersten Kurvenscheibenelements 3a befindet sich nun oberhalb des in etwa kreissegmentförmigen Oberflächenabschnitts 3d des ersten Führungselements 3c. Das Förderelement 4 wird entlang des in etwa kreissegmentförmigen Oberflächenabschnitts 3d des ersten Führungselements 3c bewegt, wobei es vom zur Rotationsrichtung abgewandten Ende der Greifeinrichtung 3b gestossen wird.

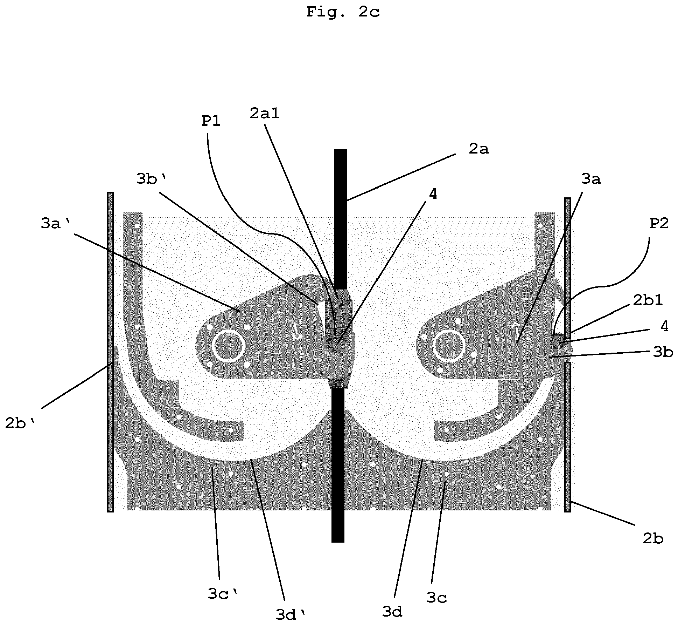

In der in Fig. 2c gezeigten Position wurden beide Kurvenscheibenelemente 3a, 3a' gegenüber der in Fig. 2b gezeigten Position um etwa 105° rotiert, wobei das erste Kurvenscheibenelement 3a entgegen dem Uhrzeigersinn und das zweite Kurvenscheibenelement 3a' im Uhrzeigersinn gedreht wurde. Die Greifeinrichtung 3b des ersten Kurvenscheibenelements 3a befindet sich nun am zweiten Übergabepunkt P2. Gleichzeitig befindet sich ein Mitnehmer 2b1 der zweiten Fördereinheit 2b am zweiten Übergabepunkt P2. Die Greifeinrichtung 3b des ersten Kurvenscheibenelements 3a trägt das Förderelement 4, welches am zweiten Übergabepunkt P2 von dem Mitnehmer 2b1 der zweiten Fördereinheit 2b in einer vorzugsweise kontinuierlichen Bewegung übernommen wird.
Gleichzeitig befindet sich die Greifeinrichtung 3b' des zweiten Kurvenscheibenelements 3a' am ersten Übergabepunkt P1. Gleichzeitig befindet sich ein Mitnehmer 2a1 der ersten Fördereinheit 2a am ersten Übergabepunkt P1. Der Mitnehmer 2a1 trägt ein Förderelement 4, welches am ersten Übergabepunkt P1 von der Greifeinrichtung 3b' des zweiten Kurvenscheibenelements 3a' in einer vorzugsweise kontinuierlichen Bewegung übernommen wird.

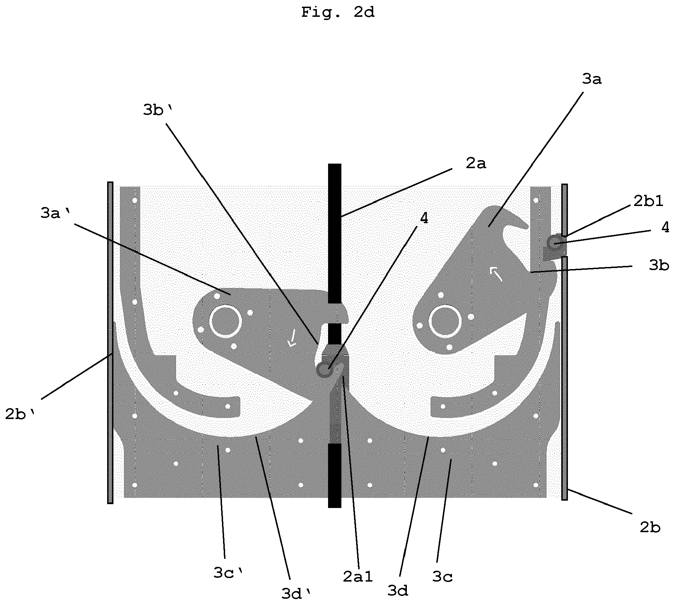

In der in Fig. 2d gezeigten Position wurden beide Kurvenscheibenelemente 3a, 3a' gegenüber der in Fig. 2c gezeigten Position ein wenig weiter rotiert, wobei das erste Kurvenscheibenelement 3a entgegen dem Uhrzeigersinn und das zweite Kurvenscheibenelement 3a' im Uhrzeigersinn gedreht wurde. Das erste Kurvenscheibenelement 3a hat sein Förderelement 4 an die zweite Fördereinheit 2b übergeben, welches das Förderelement 4 vertikal nach oben zu einem (nicht gezeigten) Schneidmodul transportiert. Das zweite Kurvenscheibenelement 3a' hat ein Förderelement 4 übernommen, und seine Greifeinrichtung 3b' gelangt in Kontakt mit dem in etwa kreissegmentförmigen Oberflächenabschnitt 3d' des zweiten Führungselements 3c', wo es anschliessend die in Fig. 2b für das erste Kurvenscheibenelement 3a beschriebene Beförderung ausführt.

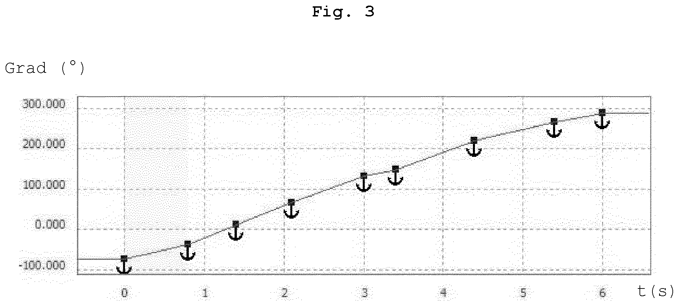

In Fig. 3 ist eine Bewegungskurve eines Kurvenscheibenelements 3a, 3a' einer Ausführungsform des erfindungsgemässen Fördersystems 1 veranschaulicht. Zum Zeitpunkt t=0s befindet sich die Greifeinrichtung 3b, 3b' des Kurvenscheibenelements 3a, 3a' am zweiten Übergabepunkt P2 und übergibt das Förderelement 4 an die zweite Fördereinheit 2b, 2b'. Anschliessend erfährt das Kurvenscheibenelement 3a, 3a' eine Beschleunigung, welche ab einem Zeitpunkt t=0,8 s erhöht wird. Zum Zeitpunkt t=3s befindet sich die Greifeinrichtung 3b, 3b' des Kurvenscheibenelements 3a, 3a' am ersten Übergabepunkt P1 und übernimmt das Förderelement 4 von der ersten Fördereinheit 2a. Das Kurvenscheibenelement 3a, 3a' wird abgebremst, bevor es ab dem Zeitpunkt t=3,4s eine erneute Beschleunigung erfährt, welche ab dem Zeitpunkt t=4,4s verringert wird. Beim Zeitpunkt t=6s erreicht die Greifeinrichtung 3b, 3b' des Kurvenscheibenelements 3a, 3a' den zweiten Übergabepunkt P2 und übergibt das Förderelement 4 an die zweite Fördereinheit 2b, 2b'.

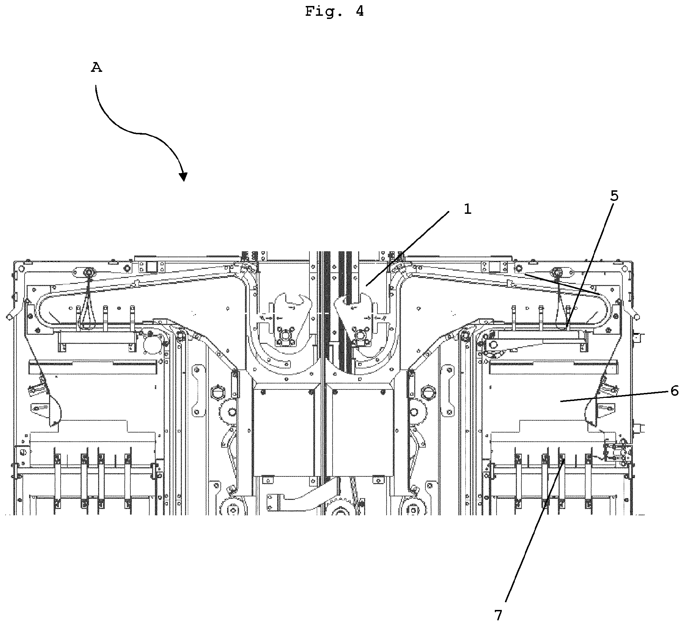

In Fig. 4 ist eine schematische Ansicht einer Ausführungsform einer erfindungsgemässen Anlage A zur Herstellung von länglichen Teigwaren gezeigt. Die Anlage A umfasst ein erfindungsgemässes Fördersystem 1, hier in der Ausführungsform gemäss Fig. 1. Die Anlage 1 gemäss Fig. 4 weist nur ein Schneidmodul auf der rechten Seite des Fördersystems 1 auf, kann aber mit einem zusätzlichen Schneidmodul auf der linken Seite des Fördersystems 1 aufgerüstet werden.

Die an sich bekannte Anlage umfasst einen Ablegetisch 5, zu welchem die länglichen Teigwaren von dem Fördersystem 1 aus transportiert werden. Unterhalb des Ablagetisches 5 befindet sich die Austragsband/-kette 7 der Schneidmaschine 6. Das ungeschnittene Produkt gelangt anschliessend auf den Austragsband/-kette 7 und wird von den Austragsband/-kette 7 durch eine Schneidaggregat (z.B. mit rotierenden Messer - nicht gezeigt) aus der Anlage A herausbefördert und dabei geschnitten.

## Patentansprüche

1. Fördersystem (1) für eine Anlage zur Herstellung von länglichen Teigwaren, beispielsweise Spaghetti, umfassend eine erste Fördereinheit (2a) und eine zweite Fördereinheit (2b) sowie eine Übergabeeinheit (3) zur Übergabe von Förderelementen (4) von der ersten Fördereinheit (2a)zur zweiten Fördereinheit (2b), **dadurch gekennzeichnet, dass** die Übergabeeinheit (3) ein rotierbar gelagertes Kurvenscheibenelement (3a) mit einer Greifeinrichtung (3b) und ein fest angeordnetes Führungselement (3c) mit einem in etwa kreissegmentförmigen Oberflächenabschnitt (3d) umfasst, wobei das Kurvenscheibenelement (3a) und das Führungselement (3c) derart zueinander angeordnet sind, dass ein von der Greifeinrichtung (3b) des Kurvenscheibenelements (3a) von der ersten Fördereinheit (2a) übernommenes Förderelement (4) durch Rotation des Kurvenscheibenelements (3a) entlang des in etwa kreissegmentförmigen Oberflächenabschnitts (3d) des Führungselements (3c) bis zu einer Position bewegt werden kann, wo das Förderelement (4) von der zweiten Fördereinheit (2b) übernommen werden kann.

2. Fördersystem nach Anspruch 1, **dadurch gekennzeichnet, dass** die Übergabeeinheit (3) ein erstes und ein zweites Kurvenscheibenelement (3a, 3a') sowie ein erstes und ein zweites Führungselement (3c, 3c') mit jeweils einem in etwa kreissegmentförmigen Oberflächenabschnitt (3d, 3d') aufweist und jedem Kurvenscheibenelement (3a, 3a') eine zweite Fördereinheit (2b, 2b') zugeordnet ist, wobei das erste Kurvenscheibenelement (3a) und das erste Führungselement (3c) sowie das zweite Kurvenscheibenelement (3a') und das zweite Führungselement (3c') derart zueinander angeordnet sind, dass ein von der Greifeinrichtung (3b, 3b') des jeweiligen Kurvenscheibenelements (3a, 3a') von der ersten Fördereinheit (2a) übernommenes Förderelement (4) durch Rotation des jeweiligen Kurvenscheibenelements (3a, 3a') entlang des in etwa kreissegmentförmigen Oberflächenabschnitts (3d, 3d') des jeweils zugeordneten Führungselements (3c, 3c') bis zu einer Position bewegt werden kann, wo das Förderelement (4) von der zweiten Fördereinheit (2b, 2b') übernommen werden kann.

3. Fördersystem nach Anspruch 2, **dadurch gekennzeichnet, dass** das erste und zweite Kurvenscheibenelement (3a, 3a') sowie das erste und ein zweite Führungselement (3c, 3c') achsensymmetrisch um die erste Fördereinheit (2a) angeordnet sind.

4. Fördersystem nach einem der vorhergehenden Ansprüche, **dadurch gekennzeichnet, dass** das oder die Kurvenscheibenelement(e) (3a, 3a') sowie die erste Fördereinheit (2a) und die zweite Fördereinheit(en) (2b, 2b') derart aufeinander abgestimmt bewegt werden können, dass eine kontinuierliche Übergabe des Förderelements (4) von der ersten Fördereinheit (2a) zur zweiten Fördereinheit (2b) durchgeführt werden kann.

5. Fördersystem nach einem der vorhergehenden Ansprüche, **dadurch gekennzeichnet, dass** die erste Fördereinheit (2a) eine Pendelkette ist.

6. Fördersystem nach einem der vorhergehenden Ansprüche, **dadurch gekennzeichnet, dass** die zweite Fördereinheit(en) (2b, 2b') eine Abstreifkette zur Beförderung des Förderelements (4) zu einem Ablagetisch (5) einer Schneidmaschine (6) ist.

7. Anlage (A) zur Herstellung von länglichen Teigwaren, beispielsweise Spaghetti, umfassend ein Fördersystem gemäss einem der Ansprüche 1 bis 6.

8. Verfahren zur Förderung von länglichen Teigwaren, beispielsweise Spaghetti, mit einem Fördersystem gemäss einem der Ansprüche 1 bis 6, umfassend die Schritte:
a) Förderung eines Förderelements (4), welches die länglichen Teigwaren trägt, mittels einer ersten Fördereinheit (2a) bis zu einem ersten Übergabepunkt (P1),
b) Übernahme des Förderelements (4) von der ersten Fördereinheit (2a) durch eine Übergabeeinheit (3) und Förderung des Förderelements (4) bis zu einem zweiten Übergabepunkt (P2),
c) Übernahme des Förderelements (4) am zweiten Übergabepunkt (P2) von der Übergabeeinheit (3) durch eine zweite Fördereinheit (2b),
**dadurch gekennzeichnet, dass** in Schritt b) die Übernahme des Förderelements (4) am ersten Übergabepunkt (P1) durch die Greifeinrichtung (3b) des Kurvenscheibenelements (3a) der Übergabeeinheit (3) erfolgt, und die Förderung des Förderelements (4) bis zu einem zweiten Übergabepunkt (P2) entlang des in etwa kreissegmentförmigen Oberflächenabschnitts (3d) des Führungselements (3c) der Übergabeeinheit (3) erfolgt.

9. Verfahren nach Anspruch 8, **dadurch gekennzeichnet, dass** die die Rotationsgeschwindigkeit des Kurvenscheibenelements (3a) und die Fördergeschwindigkeiten der ersten Fördereinheit (2a) und der zweiten Fördereinheit (2b) derart aufeinander abgestimmt sind, dass am ersten Übergabepunkt (P1) und am zweiten Übergabepunkt (P2) die Greifeinrichtung (3b) das Förderelement (4) in einem kontinuierlichen Prozess von der ersten Fördereinheit (2a) aufnehmen beziehungsweise an die zweite Fördereinheit (2a) abgeben kann.

10. Verfahren nach einem der Ansprüche 8 oder 9, **dadurch gekennzeichnet, dass** das Förderelement (4) von der zweiten Fördereinheit (2a) zu einer Schneidmaschine (6) transportiert wird.

11. Verfahren nach einem der Ansprüche 8 bis 10, **dadurch gekennzeichnet, dass** von der ersten Fördereinheit (2a) geförderte Förderelemente (4) abwechselnd von einem ersten Kurvenscheibenelement (3a) oder einem zweiten Kurvenscheibenelement (3a') übernommen und zu einer entsprechenden zweiten Fördereinheit (2b, 2b') gefördert werden.

12. Verfahren nach Anspruch 11, **dadurch gekennzeichnet, dass** die Bewegung des ersten Kurvenscheibenelements (3a) und des zweiten Kurvenscheibenelements (3a') derart aufeinander abgestimmt ist, dass das erste Kurvenscheibenelement (3a) nicht mit dem zweiten Kurvenscheibenelement (3a') kollidiert.

13. Verfahren nach Anspruch 11 oder 12, **dadurch gekennzeichnet, dass** die Fördergeschwindigkeit der ersten Fördereinheit (2a) 50% der Rotationsgeschwindigkeiten der Kurvenscheibenelemente (3a, 3a') beträgt, wobei sich die Kurvenscheibenelemente (3a, 3a') gegensinnig mit gleicher Geschwindigkeit drehen.

14. Verfahren nach einem der Ansprüche 11 bis 13, **dadurch gekennzeichnet, dass** im Fall einer Störung die Rotation desjenigen Kurvenscheibenelements (3a, 3a') angehalten wird, welches in der mit der Störung behafteten Förderbahn angeordnet ist.

15. Verfahren nach Anspruch 14, **dadurch gekennzeichnet, dass** im Fall einer Störung die Fördergeschwindigkeit der ersten Fördereinheit (2a) um 50% verringert wird.
